# EUROPEAN PATENT APPLICATION

(11) **EP 4 520 564 A1**
(43) Date of publication of application: **12.03.2025**
(21) Application number: 23306510.1
(22) Date of filing: 11.09.2023
(51) Int. Cl.: B60K 1/04

(54) **DEVICE FOR RELEASING AN INTERCHANGEABLE BATTERY PACK**

(71) Applicant: Plastic Omnium Clean Energy Systems Research, 69007 Lyon (FR)
(72) Inventor: DERANGERE, Nicolas, 1200 Bruxelles (BE)
(74) Representative: LLR

(57) **Abstract**

A device for releasing an interchangeable battery pack from a battery box, the device comprises a first apparatus (1) configured to be coupled to an interchangeable battery pack (10) and a second apparatus (2) configured to be coupled to the first apparatus (1), the first apparatus (1) comprises:
- a first coupling means (3) which is configured to cooperate with corresponding coupling means of the interchangeable battery pack (10) such that the first apparatus (1) is coupled to the interchangeable battery pack (10) in coupled operating position of the first coupling means (3),
- a second coupling means (4) which is configured to cooperate with corresponding coupling means of a battery box (20) such that the first apparatus (1) is coupled to the battery box (20) in coupled operating position of the second coupling means (4),
- a third coupling means (5) which is configured to cooperate with corresponding coupling means of the second apparatus (2) such that the first apparatus (1) is coupled to the second apparatus (2) in coupled operating position of the third coupling means (5),
the second apparatus (2) comprises a releasing member (6) configured to release the interchangeable battery pack (10) from the battery box (20) in released position of the interchangeable battery pack (10) by setting the third coupling means (5) in coupled operating position and the second coupling means (4) in decoupled operating position.

## Description

### Technical field of the invention

The present invention relates to a device for releasing an interchangeable battery pack from a battery box, an interchangeable battery pack for plugging into a battery box, a battery box for an electric vehicle, a method of releasing an interchangeable battery pack from a battery box and an electric vehicle comprising a battery box.

### Background of the invention

One of the most significant challenges of electric vehicles is range compared to thermal vehicles.

To increase the range of an electric vehicle, it is known to increase the number of rechargeable battery packs on board the electric vehicle.

To further increase the range of an electric vehicle, it is known to equip the electric vehicle with interchangeable battery packs. Indeed, this technology allows a simple and quick change of the rechargeable battery packs when they are discharged. All the driver has to do is go to a specific station called "Quick Drop" to replace the discharged interchangeable battery packs with new battery packs charged to full capacity.

In an electric vehicle equipped with N interchangeable battery packs, the electric vehicle includes a battery box or case with N housings for housing the N interchangeable battery packs. N being an integer equal to two or more.

In order to maintain the interchangeable battery packs in position in their housings during normal usage of the electric vehicle but also during a collision, it is known to block all the interchangeable battery packs with a bar or crosspiece positioned at the inlet/outlet of the housings.

When it is time to replace an interchangeable battery pack, the bar has to be removed in order to unblock the inlet/outlet of the housings and release the interchangeable battery pack. This is a problem because an operator who has removed the bar in order to replace an interchangeable battery pack may forget to put the bar back in place. In this case, the interchangeable battery packs can all be properly connected to the electric circuit of the electric vehicle through electrical connectors and the driver will not notice any problems until the electric connection is lost. This can occur when the electric vehicle undergoes an acceleration or deceleration in a direction parallel to the inserting direction of the interchangeable battery packs into the battery box. Such acceleration or deceleration can occur during normal usage of the electric vehicle but also during a collision. If the acceleration or deceleration is violent, the interchangeable battery packs may also be ejected from the battery box like shells, which is not desirable in terms of safety.

Another problem is that when the bar is removed, it may be damaged or lost.

Another problem is that when the bar is removed, all the interchangeable battery packs are released at once: the one that needs to be replaced and the others that do not need to be replaced. This is not satisfactory.

In view of the above, there is a need for a solution to retain all the interchangeable battery packs during normal usage of the electric vehicle but also during a collision, even if the bar is missing.

Furthermore, there is a need for a solution without risk of damage or loss of the bar.

Last but not least, there is a need for a solution to not release all the interchangeable battery packs at once.

### Summary of the invention

The present invention provides a device for releasing an interchangeable battery pack from a battery box, the device comprises a first apparatus configured to be coupled to an interchangeable battery pack and a second apparatus configured to be coupled to the first apparatus, the first apparatus comprises:
- a first coupling means which is configured to cooperate with corresponding coupling means of the interchangeable battery pack such that the first apparatus is coupled to the interchangeable battery pack in coupled operating position of the first coupling means,
- a second coupling means which is configured to cooperate with corresponding coupling means of a battery box such that the first apparatus is coupled to the battery box in coupled operating position of the second coupling means,
- a third coupling means which is configured to cooperate with corresponding coupling means of the second apparatus such that the first apparatus is coupled to the second apparatus in coupled operating position of the third coupling means,
the second apparatus comprises a releasing member configured to release the interchangeable battery pack from the battery box in released position of the interchangeable battery pack by setting the third coupling means in coupled operating position and the second coupling means in decoupled operating position.
The device according to the present invention allows an interchangeable battery pack to be retained by itself in the battery box thanks to the second coupling means, without relying on the presence of a bar. A bar is therefore no longer necessary.

Moreover, the device according to the present invention is fully coupled to the interchangeable battery pack in released position of the interchangeable battery pack. Therefore, there is no risk of the device being damaged or lost because the first apparatus must be coupled to the interchangeable battery pack and the second apparatus must be coupled to the first apparatus for the interchangeable battery pack to be released.
Last but not least, the device according to the present invention allows an interchangeable battery pack to be released individually, i.e. separately and independently of another interchangeable battery pack from a battery box. Therefore, not all interchangeable battery packs are released at once.

According to a preferred embodiment, the second and the third coupling means are movable such that the movement of the third coupling means is coupled to the movement of the second coupling means so that the coupling of the third coupling means provokes the decoupling of the second coupling means. This combined movement allows faster releasing of the interchangeable battery pack from the battery box.

According to a preferred embodiment, the first coupling means includes a plurality of screws configured to engage corresponding threads of the interchangeable battery pack. This allows to manufacture the first coupling means in a simple and cost-effective manner.

According to a preferred embodiment, the second coupling means comprises a feather key configured to engage a corresponding abutment surface of the battery box. This allows to manufacture the second coupling means in a simple and cost-effective manner.

According to a preferred embodiment, the third coupling means comprises a rotating fastener configured to engage a corresponding lug or stud of the second apparatus. This allows to manufacture the third coupling means in a simple and cost-effective manner.

In a preferred embodiment, the second apparatus comprises a gripping handle adapted to pull the interchangeable battery pack out of the battery box in coupled operating position of the third coupling means and in decoupled operating position of the second coupling means. This allows faster dismounting of the interchangeable battery pack from the battery box.

It is also provided according to the invention an interchangeable battery pack for plugging into a battery box, wherein the interchangeable battery pack comprises coupling means coupled to a first coupling means of a first apparatus such that the first apparatus is coupled to the interchangeable battery pack in coupled operating position of the first coupling means, the first apparatus comprising:
- a second coupling means which is configured to cooperate with corresponding coupling means of a battery box such that the first apparatus is coupled to the battery box in coupled operating position of the second coupling means,
- a third coupling means which is configured to cooperate with corresponding coupling means of a second apparatus such that the first apparatus is coupled to the second apparatus in coupled operating position of the third coupling means,
the second apparatus comprising a releasing member configured to release the interchangeable battery pack from the battery box in released position of the interchangeable battery pack by setting the third coupling means in coupled operating position and the second coupling means in decoupled operating position.

This allows quick and individual release of interchangeable battery pack from a battery box.

According to one particularly preferred embodiment, the interchangeable battery pack is a portable interchangeable battery pack. In other words, a human can carry the interchangeable battery pack.

It is also provided according to the invention a battery box for an electric vehicle, the battery box comprises N housings adapted to house N interchangeable battery packs as presented above, each housing comprises coupling means configured to couple to a second coupling means of a first apparatus in coupled operating position of the second coupling means, the first apparatus comprising:
- a first coupling means which cooperates with corresponding coupling means of the interchangeable battery pack such that the first apparatus is coupled to the interchangeable battery pack in coupled operating position of the first coupling means,
- a third coupling means which is configured to cooperate with corresponding coupling means of a second apparatus such that the first apparatus is coupled to the second apparatus in coupled operating position of the third coupling means,
the second apparatus comprising a releasing member configured to release the interchangeable battery pack from the battery box in released position of the interchangeable battery pack by setting the third coupling means in coupled operating position and the second coupling means in decoupled operating position.

N is an integer equal to two or more.

This allows to equip an electric vehicle with several interchangeable battery packs as presented above.

It is also provided according to the invention a method of releasing an interchangeable battery pack as presented above from a battery box as presented above, the method comprises the steps of:
a) providing the interchangeable battery pack coupled to the first apparatus,
b) providing the second apparatus,
c) coupling the second apparatus to the first apparatus,
d) releasing the interchangeable battery pack from the battery box by setting the third coupling means in coupled operating position and the second coupling means in decoupled operating position.

Preferably, step d) includes a step of rotating the second apparatus to set the third coupling means in coupled operating position and the second coupling means in decoupled operating position.

Preferably, the method comprises after step d), a step e) of dismounting the interchangeable battery pack from the battery box by pulling the second apparatus,
wherein the second apparatus comprises a gripping handle to pull the interchangeable battery pack out of the battery box when the third coupling means is in coupled operating position and the second coupling means is in decoupled operating position.

It is also provided according to the invention an electric vehicle comprising a battery box as presented above.

### Brief description of the drawings

Figure 1 is a perspective view of the first apparatus of a device according to the invention before being coupled to an interchangeable battery pack;
Figure 2 is a perspective view of the first apparatus before being coupled to the second apparatus of a device according to the invention;
Figure 3 is a perspective view of the first apparatus after being coupled to an interchangeable battery pack and to the second apparatus;
Figure 4 is a perspective view of a battery box according to the invention;
Figures 5a-5b are perspective views of an interchangeable battery pack being released;
Figure 6 is a perspective view of an interchangeable battery pack being dismounted;
Figures 7a-7c are perspective views of an electric vehicle comprising a battery box according to the invention.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

In the present description, it is possible to index certain elements or parameters, such as for example first element or second element as well as first parameter and second parameter, or first criterion and second criterion, and so on. In this case, it is a simple indexing for differentiate and name elements or parameters or criteria that are close but not identical. This indexing does not imply a priority of one element, parameter or criterion with respect to another, and it is easy to interchange such denominations without departing from the scope of the present description. This indexing does not imply an order in time either.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

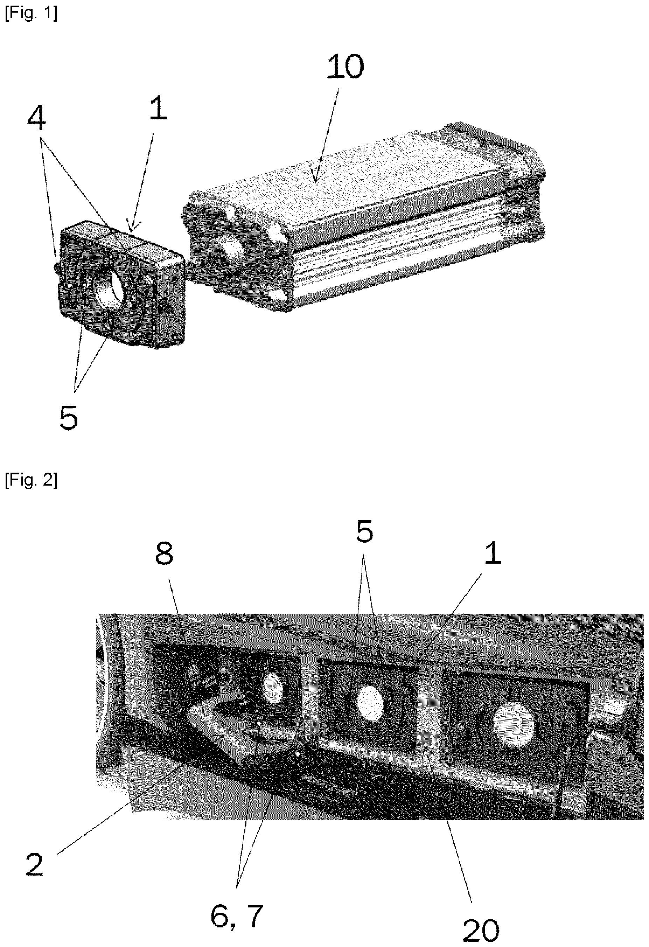

Figures 1 to 3 represent a device for releasing an interchangeable battery pack from a battery box. The device according to the present invention comprises a first apparatus 1 configured to be coupled to an interchangeable battery pack 10 and a second apparatus 2 configured to be coupled to the first apparatus 1. The first apparatus 1 comprises:
- a first coupling means 3 which is configured to cooperate with corresponding coupling means of the interchangeable battery pack 10 such that the first apparatus 1 is coupled to the interchangeable battery pack 10 in coupled operating position of the first coupling means 3,
- a second coupling means 4 which is configured to cooperate with corresponding coupling means of a battery box 20 such that the first apparatus 1 is coupled to the battery box 20 in coupled operating position of the second coupling means 4,
- a third coupling means 5 which is configured to cooperate with corresponding coupling means of the second apparatus 2 such that the first apparatus 1 is coupled to the second apparatus 2 in coupled operating position of the third coupling means 5,
   the second apparatus 2 comprises a releasing member 6 configured to release the interchangeable battery pack 10 from the battery box 20 in released position of the interchangeable battery pack 10 by setting the third coupling means 5 in coupled operating position and the second coupling means 4 in decoupled operating position.

In a preferred embodiment, the second coupling means 4 and the third coupling means 5 are movable such that the movement of the third coupling means 5 is coupled to the movement of the second coupling means 4 so that the coupling of the third coupling means 5 provokes the decoupling of the second coupling means 4.

In a preferred embodiment, the first coupling means 3 includes a plurality of screws configured to engage corresponding threads of the interchangeable battery pack 10.

In a preferred embodiment, the second coupling means 4 comprises a feather key configured to engage a corresponding abutment surface of the battery box 20.

In a preferred embodiment, the third coupling means 5 comprises a rotating fastener configured to engage a corresponding lug or stud 7 of the second apparatus 2.

In a preferred embodiment, the second apparatus 2 comprises a gripping handle 8 adapted to pull the interchangeable battery pack 10 out of the battery box 20 in coupled operating position of the third coupling means 5 and in decoupled operating position of the second coupling means 4.

As illustrated in Figures 1 to 3, the present invention also concerns an interchangeable battery pack 10 for plugging into a battery box. The interchangeable battery pack 10 comprises coupling means coupled to a first coupling means 3 of a first apparatus 1 such that the first apparatus 1 is coupled to the interchangeable battery pack 10 in coupled operating position of the first coupling means 3. The first apparatus 1 comprising:
- a second coupling means 4 which is configured to cooperate with corresponding coupling means of a battery box 20 such that the first apparatus 1 is coupled to the battery box 20 in coupled operating position of the second coupling means 4,
- a third coupling means 5 which is configured to cooperate with corresponding coupling means of a second apparatus 2 such that the first apparatus is coupled to the second apparatus 2 in coupled operating position of the third coupling means 5,
   the second apparatus 2 comprising a releasing member 8 configured to release the interchangeable battery pack 10 from the battery box 20 in released position of the interchangeable battery pack 10 by setting the third coupling means 5 in coupled operating position and the second coupling means 4 in decoupled operating position.

In a preferred embodiment, the interchangeable battery pack 10 is a portable interchangeable battery pack.

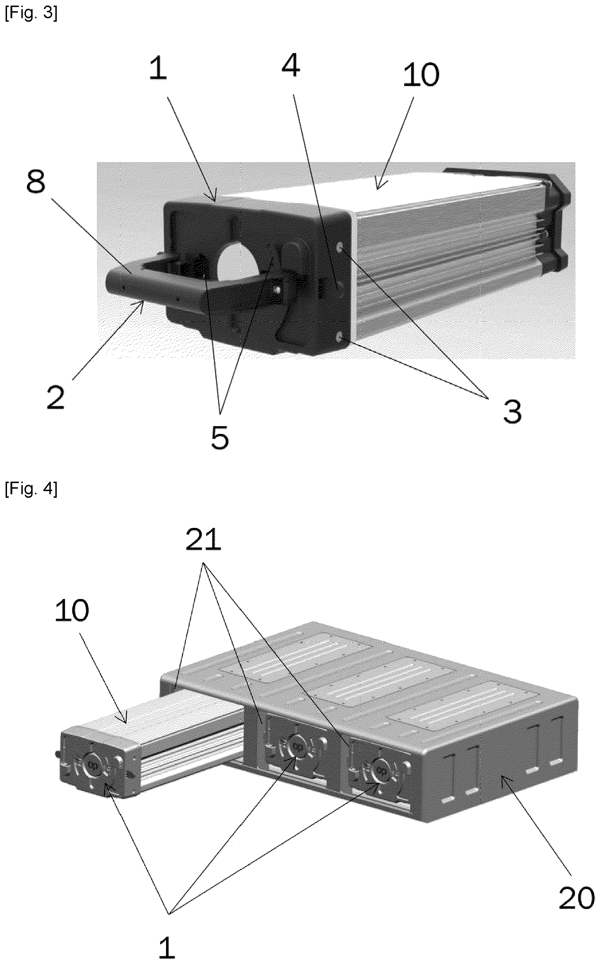

As illustrated in Figure 4, the present invention also concerns a battery box 20 for an electric vehicle, the battery box 20 comprises N housings 21 adapted to house N interchangeable battery packs 10 as described above. In this example, N is equal to three. Each housing 21 comprises coupling means configured to couple to a second coupling means 4 of a first apparatus 1 in coupled operating position of the second coupling means 4. The first apparatus 1 comprising:
- a first coupling means 3 which cooperates with corresponding coupling means of the interchangeable battery pack 10 such that the first apparatus 1 is coupled to the interchangeable battery pack 10 in coupled operating position of the first coupling means 3,
- a third coupling 5 means which is configured to cooperate with corresponding coupling means of a second apparatus 2 such that the first apparatus 1 is coupled to the second apparatus 2 in coupled operating position of the third coupling means 5,
the second apparatus 2 comprising a releasing member 8 configured to release the interchangeable battery pack 10 from the battery box 20 in released position of the interchangeable battery pack 10 by setting the third coupling means 5 in coupled operating position and the second coupling means 4 in decoupled operating position.

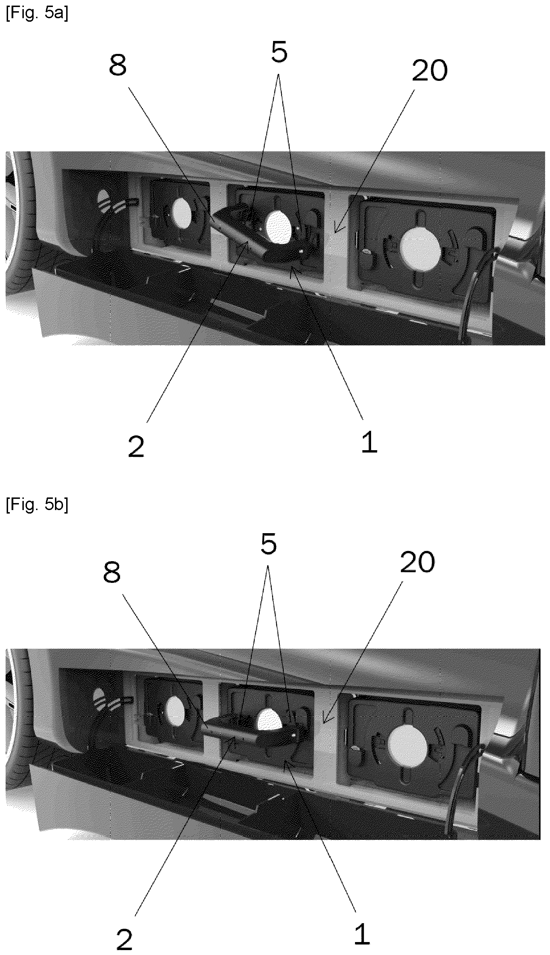

As illustrated in Figures 5a-5b, the present invention also concerns a method of releasing an interchangeable battery pack 10 as described above from a battery box 20 as described above. The method comprises the steps of:
a) providing the interchangeable battery pack 10 coupled to the first apparatus 1,
b) providing the second apparatus 2,
c) coupling the second apparatus 2 to the first apparatus 1,
d) releasing the interchangeable battery pack 10 from the battery box 20 by setting the third coupling means 5 in coupled operating position and the second coupling means 4 in decoupled operating position.

Preferably, step d) includes a step of rotating the second apparatus 2 to set the third coupling means 5 in coupled operating position and the second coupling means 4 in decoupled operating position.

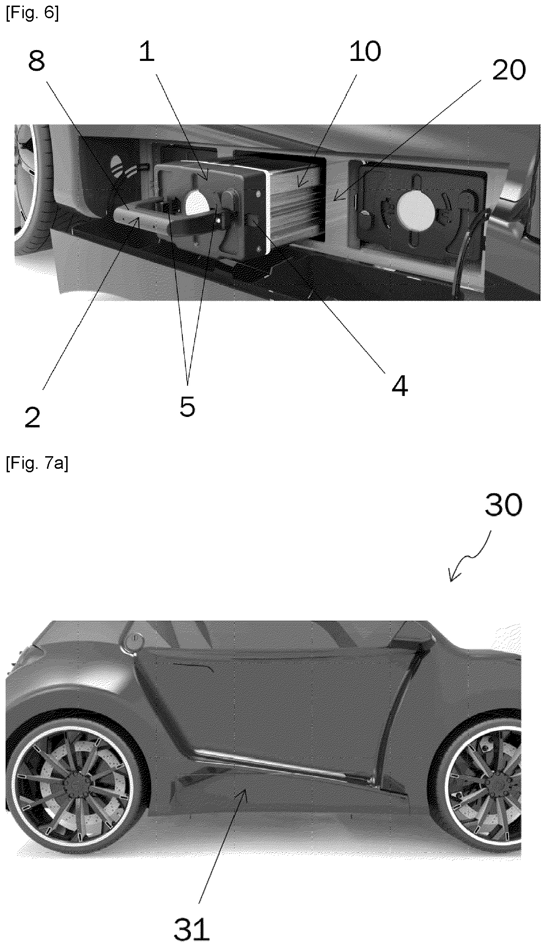

As illustrated in Figure 6, the method comprises after step d), a step e) of dismounting the interchangeable battery pack 10 from the battery box 20 by pulling the second apparatus 2,
the second apparatus 2 comprises a gripping handle 8 to pull the interchangeable battery pack 10 out of the battery box 20 when the third coupling means 5 is in coupled operating position and the second coupling means 4 is in decoupled operating position.

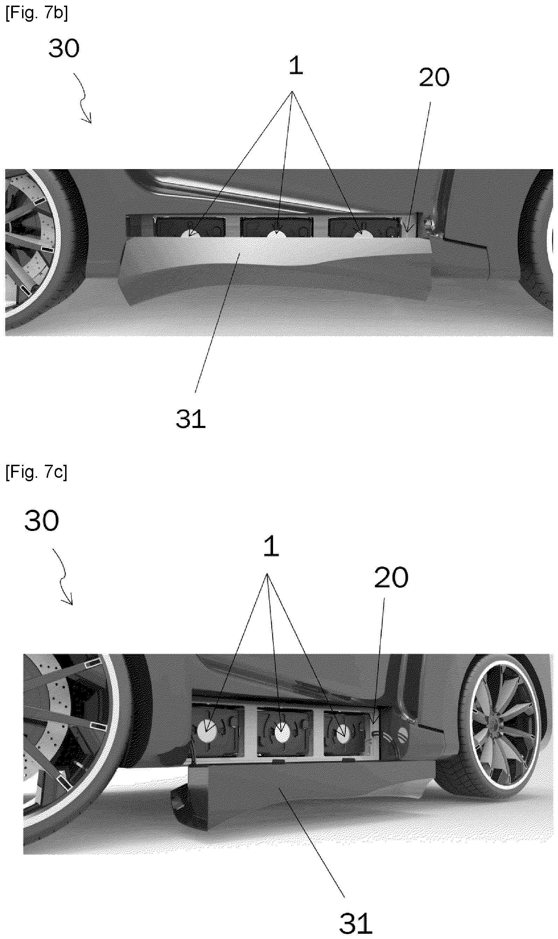

As illustrated in Figures 7a-7c, the present invention also concerns an electric vehicle 30 comprising a battery box 20 as described above.

In this example, the electric vehicle 30 comprises a battery cap 31 that covers the inlet/outlet of the battery box 20 to protect it when there is no need to access it.

When it is necessary to access the battery box 20, the battery cap 31 is opened.

Of note, the feather key of the second coupling means 4 in figures 3 and 6 is not supposed to be visible because when the second apparatus 2 sets the interchangeable battery pack 10 in released position, the second coupling means 4 is in decoupled operating position, which means that the feather key is retracted. However, in order to better see the feather key in figures 3 and 6, the feather key is shown extended (as in figures 1 and 4).

The here-above embodiments are illustrative and not restrictive embodiments. Obviously, many modifications and variations of the present invention are possible in the light of the above teachings without deviating from its inventive concept. It has therefore to be understood that the invention may be practiced otherwise than as specifically described.

### List of references

1: first apparatus
2: second apparatus
3: first coupling means
4: second coupling means
5: third coupling means
6: releasing member
7: lug or stud
8: gripping handle
10: interchangeable battery pack
20: battery box
21: housing
30: electric vehicle
31: battery cap

## Claims

1. A device for releasing an interchangeable battery pack from a battery box, the device comprises a first apparatus (1) configured to be coupled to an interchangeable battery pack (10) and a second apparatus (2) configured to be coupled to the first apparatus (1), the first apparatus (1) comprises:
- a first coupling means (3) which is configured to cooperate with corresponding coupling means of the interchangeable battery pack (10) such that the first apparatus (1) is coupled to the interchangeable battery pack (10) in coupled operating position of the first coupling means (3),
- a second coupling means (4) which is configured to cooperate with corresponding coupling means of a battery box (20) such that the first apparatus (1) is coupled to the battery box (20) in coupled operating position of the second coupling means (4),
- a third coupling means (5) which is configured to cooperate with corresponding coupling means of the second apparatus (2) such that the first apparatus (1) is coupled to the second apparatus (2) in coupled operating position of the third coupling means (5),
the second apparatus (2) comprises a releasing member (6) configured to release the interchangeable battery pack (10) from the battery box (20) in released position of the interchangeable battery pack (10) by setting the third coupling means (5) in coupled operating position and the second coupling means (4) in decoupled operating position.

2. A device according to claim 1, wherein the second (4) and the third (5) coupling means are movable such that the movement of the third coupling means (5) is coupled to the movement of the second coupling means (4) so that the coupling of the third coupling means (5) provokes the decoupling of the second coupling means (4).

3. A device according to claim 1 or 2, wherein the first coupling means (3) includes a plurality of screws configured to engage corresponding threads of the interchangeable battery pack (10).

4. A device according to anyone of claim 1 to 3, wherein the second coupling means (4) comprises a feather key configured to engage a corresponding abutment surface of the battery box (20).

5. A device according to anyone of claims 1 to 4, wherein the third coupling means (5) comprises a rotating fastener configured to engage a corresponding lug or stud (7) of the second apparatus (2).

6. A device according to anyone of claims 1 to 5, wherein the second apparatus (2) comprises a gripping handle (8) adapted to pull the interchangeable battery pack (10) out of the battery box (20) in coupled operating position of the third coupling means (5) and in decoupled operating position of the second coupling means (4).

7. An interchangeable battery pack (10) for plugging into a battery box, wherein the interchangeable battery pack (10) comprises coupling means coupled to a first coupling means (3) of a first apparatus (1) such that the first apparatus (1) is coupled to the interchangeable battery pack (10) in coupled operating position of the first coupling means (3), the first apparatus (1) comprising:
- a second coupling means (4) which is configured to cooperate with corresponding coupling means of a battery box (20) such that the first apparatus (1) is coupled to the battery box (20) in coupled operating position of the second coupling means (4),
- a third coupling means (5) which is configured to cooperate with corresponding coupling means of a second apparatus (2) such that the first apparatus is coupled to the second apparatus (2) in coupled operating position of the third coupling means (5),
the second apparatus (2) comprising a releasing member (8) configured to release the interchangeable battery pack (10) from the battery box (20) in released position of the interchangeable battery pack (10) by setting the third coupling means (5) in coupled operating position and the second coupling means (4) in decoupled operating position.

8. An interchangeable battery pack (10) according to claim 7, wherein the interchangeable battery pack (10) is a portable interchangeable battery pack.

9. A battery box (20) for an electric vehicle, the battery box (20) comprises N housings (21) adapted to house N interchangeable battery packs (10) according to claim 7 or 8, each housing (21) comprises coupling means configured to couple to a second coupling means (4) of a first apparatus (1) in coupled operating position of the second coupling means (4), the first apparatus (1) comprising:
- a first coupling means (3) which cooperates with corresponding coupling means of the interchangeable battery pack (10) such that the first apparatus (1) is coupled to the interchangeable battery pack (10) in coupled operating position of the first coupling means (3),
- a third coupling (5) means which is configured to cooperate with corresponding coupling means of a second apparatus (2) such that the first apparatus (1) is coupled to the second apparatus (2) in coupled operating position of the third coupling means (5),
the second apparatus (2) comprising a releasing member (8) configured to release the interchangeable battery pack (10) from the battery box (20) in released position of the interchangeable battery pack (10) by setting the third coupling means (5) in coupled operating position and the second coupling means (4) in decoupled operating position.

10. A method of releasing an interchangeable battery pack (10) according to claim 7 o 8 from a battery box (20) according to claim 9, the method comprises the steps of:
a) providing the interchangeable battery pack (10) coupled to the first apparatus (1),
b) providing the second apparatus (2),
c) coupling the second apparatus (2) to the first apparatus (1),
d) releasing the interchangeable battery pack (10) from the battery box (20) by setting the third coupling means (5) in coupled operating position and the second coupling means (4) in decoupled operating position.

11. A method according to claim 10, wherein step d) includes a step of rotating the second apparatus (2) to set the third coupling means (5) in coupled operating position and the second coupling means (4) in decoupled operating position.

12. A method according to claim 10 or 11, wherein the method comprises after step d), a step e) of dismounting the interchangeable battery pack (10) from the battery box (20) by pulling the second apparatus (2),
wherein the second apparatus (2) comprises a gripping handle (8) to pull the interchangeable battery pack (10) out of the battery box (20) when the third coupling means (5) is in coupled operating position and the second coupling means (4) is in decoupled operating position.

13. An electric vehicle (30) comprising a battery box (20) according to claim 9.
